# EUROPEAN PATENT SPECIFICATION

(11) **EP 3 812 114 B1**
(45) Date of publication and mention of the grant of the patent: **07.06.2023**
(21) Application number: 19382924.9
(22) Date of filing: 24.10.2019
(51) Int. Cl.: B28B 1/00, B44C 3/12, B44C 5/04, B28D 1/22

(54) **CUTTABLE CLADDING PANEL WITH A MATCHING PATTERN, USE AND MANUFACTURING METHOD THEREOF**
SCHNEIDBARE VERKLEIDUNGSPLATTE MIT PASSENDEM MUSTER, VERWENDUNG UND HERSTELLUNGSVERFAHREN DAFÜR
PANNEAU DE REVÊTEMENT POUVANT ÊTRE DÉCOUPÉ AVEC UN MOTIF CORRESPONDANT, UTILISATION ET SON PROCÉDÉ DE FABRICATION

(43) Date of publication of application: 28.04.2021
(73) Proprietor: COMPAC CORPORATE, S.L., 46727 Real de Gandia (Valencia) (ES)
(72) Inventor: SANCHIS BRINES, Francisco, 46004 Valencia (ES); del Saz Salazar, Arturo, 46185 La Pobla de Vallbona (ES)
(74) Representative: Juncosa Miró, Jaime

(56) References cited:
- EP-A1- 3 095 768
- EP-A1- 3 521 055
- WO-A1-2008/103449
- DE-A1- 2 608 036
- DE-A1-102013 004 530
- JP-A- H11 312 246

## Description

### Field of the Art

The present invention relates to a cuttable cladding panel with a matching pattern, to the manufacturing method, as well as to the use of said cladding panel for cladding kitchen worktops.

The matching pattern is a visible pattern which, upon joining different parts provided with said pattern, provides continuity from one part to another, giving an impression of wholeness and continuity between the different parts.

In this case, a cladding panel provided with an irregular pattern of elongated lines, veins, and/or strips which can be cut to different sizes is proposed, maintaining the match of the pattern between the resulting parts after cutting.

### State of the Art

Cladding panels provided with a pattern of lines, veins, and/or strips envisaged such that the lines, veins, and/or strips are continuous from one panel to another when they are located next to other similar or identical panels, offering a semblance of continuity, are known.

Documents US5011411, US2007178286, US1973564, EP2177687, and US1453728 show different examples of ceramic cladding panels provided with different patterns of ornamental motifs made up of lines, veins, and/or strips the arrangement of which allows placing different cladding panels in adjacent positions, achieving continuity of said patterns among the panels.

However, if the panels proposed in these documents were to be cut, their capacity to be put together to achieve pattern continuity between adjacent panels would be lost, making the adaptation thereof to surfaces of different sizes impossible.

Furthermore, the patterns shown in these documents are regular patterns made up of pure geometric shapes such as straight lines, circular segments, etc.

Document CN103241049A also describes cladding panels that imitate natural stone containing an irregular pattern of veins. The pattern of the different panels is designed so that, when the panels are placed in a specific order and relative position, the irregular pattern between contiguous panels is continuous, offering the semblance of a continuous pattern.

However, this document also does not allows cutting the cladding panels to adapt same to the different required sizes without the desired effect of continuity in the irregular pattern of lines, veins, and/or strips being lost.

Document WO2016189377 (ENROK SURFACE) discloses a method of manufacturing an artificial stone slab with irregular veins which may have any configuration that is, however, in accordance with a previously fixed pattern, which method comprises preparing a moldable hardenable mass of a first material and engraving the exposed upper face of the mentioned mass with a predefined precise pattern of open grooves coinciding with a pattern of veins, and subsequently filling said grooves using a head that projects a mixture of a second material, said head being moved by an automated arm following said pattern of the open grooves.

Document DE2608036 describes a cladding panel according to the preamble of claim 1, with an irregular pattern of elongated lines, veins, and/or strips configured to reach the edges of the cladding panel at predefined points selected to obtain a surface with continuous patterns when several of those cladding panels are arranged adjacent to each other.

This invention arises as a result of the need to develop a solution which allows cutting the cladding panels provided with an irregular pattern of lines, veins, strips or other motifs to different sizes, for the adaptation thereof to different substrates to be clad, while at same time allowing the attainment of the mentioned pattern continuity between adjacent panels resulting from the cut.

### Brief Description of the Invention

According to a first aspect, the present invention relates to a cladding panel defined by the features of claim 1.

A matching pattern is a continuous pattern that can be visually distinguished between adjacent elements provided with said matching pattern. In other words, two panels provided with a coordinated matching pattern can be placed one next to the other, with their adjacent borders forming a joint, such that the pattern is continuous from one panel to another coinciding at the point where the pattern of one panel and the pattern of the other panel reach the joint between both panels.

The proposed cladding panel includes, in a manner known in the state in the art:
- a front face and a back face, the front face including an irregular pattern of elongated lines, veins, and/or strips;
- transverse cutting lines determining cutting lines for cutting the cladding panel to obtain portions of cladding panel of different lengths;
- longitudinal cutting lines, symmetrical with respect to a longitudinal axis of symmetry forming pairs of longitudinal cutting lines, orthogonal to the transverse cutting lines, determining cutting lines for cutting the cladding panel to obtain portions of cladding panel of different widths; wherein
- each longitudinal cutting line cuts through the elongated lines, veins, and/or strips of the irregular pattern at longitudinal intersecting points and each transverse cutting line cuts through the elongated lines, veins, and/or strips of the irregular pattern at transverse intersecting points;
- each transverse cutting line intersects with each longitudinal cutting line at a corner point;

In other words, the present invention proposes creating a cladding panel provided with an irregular pattern, i.e. a pattern that is not defined by geometric motifs, such as lines or circles.

The cladding panel will also include a plurality of longitudinal cutting lines, associated in pairs of longitudinal cutting lines symmetrical with respect to a longitudinal axis of symmetry, and of transverse cutting lines, corresponding to straight lines along which the cladding panel can be cut, modifying its size or dividing it into smaller size sub-panels.

Each longitudinal cutting line intersects with the lines, veins, and/or strips of the pattern at points called longitudinal intersecting points, and similarly each transverse cutting line intersects with the lines, veins, and/or strips of the pattern at points called transverse intersecting points. It will be understood that the lines, veins, and/or strips can have a certain thickness, such that the corresponding longitudinal and/or transverse intersecting point will also have a certain amplitude, without this affecting the effect being sought.

Preferably, two transverse or longitudinal intersecting points which are intended to coincide with one another must have the same or very similar width to prevent the presence in the linking pattern of an abrupt change in the width of the lines, veins, and/or strips in adjacent parts.

The transverse and longitudinal cutting lines can be lines which are physically traced or indicated in the cladding panel, but it is also contemplated for said lines to be virtual lines which are not physically indicated on the cladding panel, having a position and distance with respect to the borders or with respect to the longitudinal line of symmetry that is known.

The present invention furthermore proposes, in a manner not known in the state of the art, that:
- all the transverse cutting lines have the corresponding transverse intersecting points in an identical position, in longitudinal alignment, said transverse intersecting points being symmetrical with respect to the longitudinal axis of symmetry;
- the two longitudinal cutting lines of each pair of longitudinal cutting lines have the corresponding longitudinal intersecting points in an identical position, in transverse alignment;
- each transverse intersecting point of a transverse cutting line is at the same distance from a corner point which said transverse cutting line goes through as a corresponding longitudinal intersecting point of a longitudinal cutting line going through said corner point;
such that two parts obtained by cutting the cladding panel along any transverse cutting line and/or along any pair of symmetric longitudinal cutting lines located adjacent to their respective coinciding corner points will have, therebetween, a matching and continuous irregular pattern of elongated lines, veins, and/or strips.

Each longitudinal cutting line and each transverse cutting line intersect at a corner point which will become one corner of the part resulting from cutting the cladding panel along said longitudinal and transverse cutting lines.

Therefore, it is proposed for the pattern of lines, veins, and/or strips and the transverse cutting lines to be configured such that the transverse intersecting points of each transverse cutting line are in an identical position as in the remaining transverse cutting lines, with each transverse intersecting point being aligned, in a direction parallel to the longitudinal axis of symmetry, with a transverse intersecting point of each of the remaining transverse cutting lines. This allows, when the cladding panel is cut along any one of the transverse cutting lines, keeping the position of the transverse intersecting points identical in the parts resulting from said cut, and identical on both opposite sides of the resulting part.

The expression "identical position" shall be understood to admit deviations of less than 2 cm. If the deviations between the transverse and longitudinal intersecting points remain below this maximum deviation of 2cm, the visual effect resulting from concordance between the adjacent cut pieces is maintained.

It is furthermore proposed for the transverse intersecting points of each transverse cutting line to be symmetrical with respect to the longitudinal axis of symmetry.

Therefore, the parts resulting from cutting the cladding panel along any of the defined transverse cutting lines may be placed one next to the other, with their transverse cutting lines parallel to one another and their corner points coinciding with one another, in any order and even allowing any of the parts to rotate 180°, maintaining continuity in the pattern of lines, veins, and/or strips between the adjacent parts.

As in the previous case, it will be understood that the symmetry of the intersecting points of each cut line admits deviations of less than 2cm, without damaging the visual effect of concordance.

Likewise, it is proposed for the pattern of lines, veins, and/or strips and the longitudinal cutting lines to be configured such that the longitudinal intersecting points of each longitudinal cutting line are in an identical position as the longitudinal intersecting points of another longitudinal cutting line symmetrical with respect to the longitudinal axis of symmetry, with each transverse intersecting point being aligned, in a direction perpendicular to the longitudinal axis of symmetry, with a longitudinal intersecting point of a symmetrical longitudinal cutting line. This allows, when the cladding panel is cut along two longitudinal cutting lines symmetrical with respect to the longitudinal axis of symmetry, modifying the width of the resulting cladding panel, the position of the longitudinal intersecting points remains identical on the two opposite sides, corresponding to the symmetrical longitudinal cutting lines, and remains identical in all the parts having an identical width obtained from cutting the cladding panel.

This allows the parts resulting from cutting the cladding panel along any pair of symmetrical longitudinal cutting lines to be placed one next to the other, with their longitudinal cutting lines parallel to one another and their corner points coinciding with one another, in any order, maintaining continuity in the pattern of lines, veins, and/or strips between the adjacent parts.

The pattern of lines, veins, and/or strips, the longitudinal cutting lines, and the transverse cutting lines are configured such that the distance of each transverse intersecting point of a transverse cutting line with respect to a corner point defined on said transverse cutting line is identical to the distance, with respect to that same corner point, of a longitudinal intersecting point defined on the longitudinal cutting line passing through said corner point.

Regardless of the longitudinal cutting line along which cutting is performed, this feature allows arranging the resulting parts adjacent to one another with their corner points coinciding with one another and with the sides obtained from cutting along the longitudinal cutting line joined to the sides obtained from cutting along the transverse cutting line, maintaining continuity in the pattern of lines, veins, and/or strips between the adjacent parts.

Therefore, as a result of the foregoing a cladding panel which can be cut to any width defined by a pair of longitudinal cutting lines and to any length defined by the transverse cutting lines is obtained, allowing the parts obtained from said cutting to be freely combined by placing their corner points such that they coincide with one another, maintaining the continuity of the lines, veins, and/or strips forming the pattern between the different adjacent parts, and achieving an effect of visual continuity.

This allows a cladding panel to be cut for adaptation thereof to a substrate to be clad or to a specific location, and it allows the remaining parts of the cladding panel to likewise be utilized, successfully maintaining the mentioned continuity, thereby obtaining a better visual result and increasing the utilization of the parts of the cladding panel, reducing leftover.

An irregular or random arrangement of the transverse and longitudinal intersecting points would not allow the pattern of the parts resulting from cutting to be continuous with other adjacent parts when the cladding panel is cut along the longitudinal or transverse cutting lines.

The cladding panel is preferably rectangular, having two longitudinal edges parallel to the longitudinal axis of symmetry and two transverse edges perpendicular to the longitudinal axis of symmetry.

Preferably, the two longitudinal edges can be considered equivalent to longitudinal cutting lines as they will have the same features as the longitudinal cutting lines, i.e., including longitudinal intersecting points in the same positions as those described in relation to the longitudinal cutting lines, and the two transverse edges can be considered equivalent to transverse cutting lines as they have the same features as the transverse cutting lines, for the same reason.

It is also contemplated for a cladding panel to include more than one longitudinal axis of symmetry that are adjacent and parallel to one another, each with their respective pairs of longitudinal cutting lines, therefore allowing the attainment of one or more portions of the cladding panel for each existing longitudinal axis of symmetry.

According to one embodiment, the transverse cutting lines form pairs of transverse cutting lines symmetrical with respect to a transverse axis of symmetry, the transverse axis of symmetry being perpendicular to the longitudinal axis of symmetry.

It is also proposed for there to be a plurality of intermediate longitudinal cutting lines adjacent to one another and separated by a distance between two longitudinal cutting lines located on one and the same side of the longitudinal axis of symmetry. Said plurality of adjacent longitudinal cutting lines forms a cutting band.

The longitudinal intersecting points of the longitudinal cutting lines of said cutting band are connected to one another by means of lines, veins, and/or strips of the irregular pattern that are inclined 45º with respect to said longitudinal cutting lines, i.e., within the cutting band, the lines, veins, and/or strips of the pattern will be inclined 45º.

The mentioned distance separating the longitudinal cutting lines of a cutting band will preferably be equal to or less than 10 mm, or equal to or less than 4 mm.

Therefore, the cutting band may virtually contain infinite parallel longitudinal cutting lines, all of them complying with the described requirements as a result of the 45º inclination of the lines, veins, and/or strips of the pattern within said cutting band. In other words, the cladding panel can be cut along any straight line parallel to the axis of symmetry contained within the cutting band, maintaining pattern continuity between the resulting parts.

To maintain the irregularity of the pattern, it is suitable for the cutting band to only occupy a portion of the total surface of the cladding panel, for example occupying less than 10% of its surface.

Preferably, the irregular pattern will simulate veins of natural stone.

This may be achieved, for example, by means of an artificial stone slab, i.e., a slab made of mortar or resins and aggregate granules.

In such case, the irregular pattern is preferably formed by elongated lines, veins, and/or strips embedded in said cladding panel, made of a material visually distinguishable from the material forming the rest of the cladding panel. This solution allows the lines, veins, and/or strips to be visible both on the front face and on the back face of the cladding panel, even allowing leaving both faces of the cladding panel exposed, for example, acting as a vertical partition, or allowing the interchangeable placement of the parts resulting from cutting the cladding panel exposing its front face or back face. Alternatively, it is proposed for the irregular pattern to be printed, screen-printed, and/or engraved on a visible surface of the cladding panel, which may be a ceramic panel or a laminated panel, for example.

Preferably, the transverse and longitudinal cutting lines cutting lines will be marked:
- on the back face of the cladding panel; or
- on the front face by means of a soluble ink; or
- on a removable protective film adhered to the cladding panel.

Any of these solutions allows correctly visualizing the cutting lines, while at the same time they allow preventing said cutting lines from remaining visible after installation.

According to a second aspect, the present invention relates to a method of manufacturing a cladding panel as described above, cuttable in cladding panel portions with a matching pattern. The proposed method includes a design step which comprises:
- defining, on a cladding panel to be produced, a plurality of transverse cutting lines, each one including transverse intersecting points symmetrical with respect to a longitudinal axis of symmetry, said transverse intersecting points being in an identical position in all the transverse cutting lines defined on said cladding panel;
- defining, on said cladding panel to be produced, pairs of symmetric longitudinal cutting lines symmetrical with respect to the longitudinal axis of symmetry, each of said longitudinal cutting lines including longitudinal intersecting points, said longitudinal intersecting points being in an identical position in the two longitudinal cutting lines forming each pair of symmetrical longitudinal cutting lines;
- defining, on said cladding panel to be produced, an irregular pattern of elongated lines, veins, and/or strips intersecting with the transverse cutting lines at the transverse intersecting points and the longitudinal cutting lines at the longitudinal intersecting points.

each transverse intersecting point of a transverse cutting line being defined at the same distance from a corner point which said transverse cutting line goes through as a corresponding longitudinal intersecting point defined in the longitudinal cutting line passing through said corner point;
and a manufacturing step which comprises producing the cladding panel defined in the design step.

The transverse cutting lines may also be defined forming pairs of transverse cutting lines symmetrical with respect to a transverse axis of symmetry perpendicular to the longitudinal axis of symmetry.

According to a proposed additional embodiment, the method comprises producing a cladding panel in the manufacturing step and printing, engraving, or screen-printing the irregular pattern on a visible surface of said cladding panel.

Additionally, it is proposed for the manufacturing step to comprise producing an artificial stone slab including the irregular pattern of elongated lines, veins, and/or strips embedded in said artificial stone slab, the irregular pattern being made of a material visually distinguishable from the material forming the rest of the artificial stone slab.

The proposed method for the manufacture of the artificial stone slab is proposed to include, according to a preferred embodiment, at least the following production steps:
- pouring of the material which constitutes the artificial stone slab with no irregular pattern into a cast;
- at least one compaction step of the material which constitutes the artificial stone slab without an irregular pattern;
- integration of the material forming the irregular pattern into the previously compacted material;
- at least one compaction step of all the material which constitutes the artificial stone slab;
- a curing step.

Said compaction step may be carried out, for example, by pressure applied with rollers or with a flat press and may be combined with vibration or optionally vacuum. Compaction obtained only by vibration and/or vacuum is also covered.

Curing may include the baking of the artificial stone slab.

According to a third aspect, the present invention furthermore relates to the use of the cladding panel as described above, cuttable in cladding panel portions with a matching pattern as kitchen worktops with an irregular pattern of matching and continuous elongated lines, veins, and/or strips throughout the entire kitchen worktop, the kitchen worktop being formed by several parts of the same width obtained from cutting the cladding panel along any pair of longitudinal cutting lines, and along any transverse cutting line, subsequently assembled with their corresponding corner points coinciding with one another.

In other words, the present invention proposes using the proposed cladding panel for cladding kitchen worktops by cutting the cladding panel along the desired longitudinal and/or transverse cutting lines and joining the resulting parts, achieving continuity in the pattern of lines, veins, and/or strips between the adjacent parts.

This allows, for example, cutting the cladding panel to different widths for adapting same to different kitchen widths or for allowing the worktop to project to a greater or lesser extent with respect to the furniture arranged in the lower part of the kitchen, while at the same time it allows joining different parts, for example, to form an L- or U-shaped worktop, always maintaining continuity between the adjacent parts.

Likewise, a worktop can be joined to a side front, maintaining the continuity of the pattern, or the pattern of the worktop can even be linked with the pattern of the splashback or a plinth.

Although this is the preferred use of the invention, the invention can also be for other uses, such as for cladding walls or floors, for example.

It shall be understood that this invention also covers deviations of less than 2cm from the theoretical position described for the longitudinal and transverse intersecting points without affecting the visual effect sought.

Other features of the invention will become apparent in the following detailed description of an embodiment.

### Brief Description of the Drawings

The foregoing and other advantages and features will be clearly understood based the following detailed description of an embodiment in reference to the attached drawings which must be interpreted in an illustrative and non-limiting manner, in which:
Figure 1 shows an enlarged view of a portion of cladding panel including multiple transverse and longitudinal cutting lines, with all the different elements thereof indicated with reference numbers;
Figure 2 shows the same view as Figure 1 but indicating the distances in height between two corner points and the respective transverse and longitudinal intersecting points;
Figure 3 shows a view of a cladding panel before cutting.
Figure 4 shows the same cladding panel shown in Figure 3 but after reducing the width thereof by cutting along two symmetrical longitudinal cutting lines, after dividing the cladding panel by cutting it along a transverse cutting line, and showing a first position in which the left portion of the cladding panel has been located on one side of the right portion by means of a translational movement indicated by means of arrows in the drawing, achieving pattern continuity between the left and right portions;
Figure 5 shows the same cut cladding panel as Figure 4 but showing a second position in which the left portion of the cladding panel has been located on one side of the right portion by means of a translational movement and a 90º rotation in a direction indicated by means of arrows in the drawing, achieving pattern continuity between the left and right portions;
Figure 6 shows the same cut cladding panel as Figure 4 but showing a third position in which the left portion of the cladding panel has been located on one side of the right portion by means of a translational movement and a 90º rotation in another inverse direction indicated by means of arrows in the drawing, achieving pattern continuity between the left and right portions;
Figure 7 shows a first phase of the design step for designing the cladding panel in which the longitudinal and transverse cutting lines and the longitudinal and transverse intersecting points are defined;
Figure 8 shows a second phase of the design step for designing the cladding panel in which the pattern of lines, veins, and/or strips is defined on the cladding panel, passing through the previously defined transverse and longitudinal intersecting points;

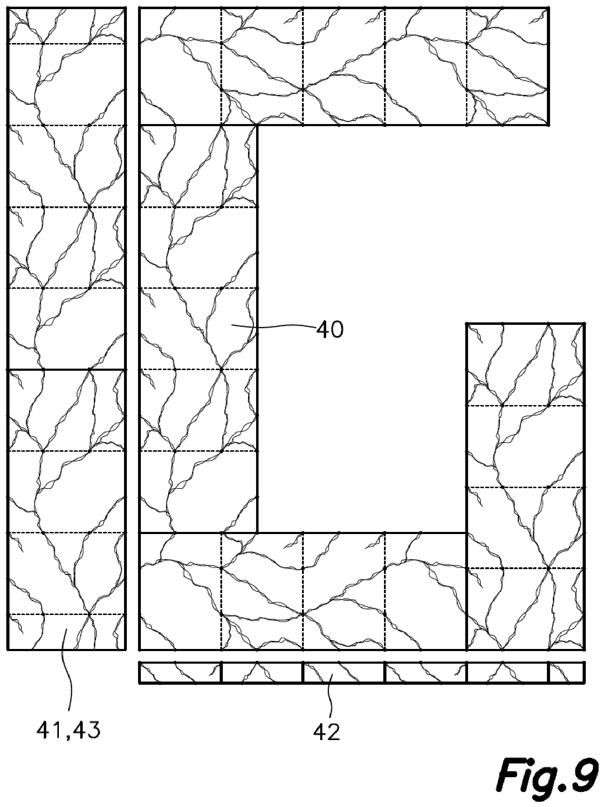

Figure 9 shows the use of the proposed cladding panel as a G-shaped kitchen worktop formed by four attached parts maintaining pattern continuity, said four parts being obtained by cutting the proposed cladding panel or several cladding panels that are identical or have identical features and dimensions. This drawing also shows a splashback in a horizontal position on the left-hand side of the drawing and formed by two attached parts, maintaining pattern continuity with one another and with the worktop, and a plinth in a horizontal position on the lower side of the drawing, formed from the leftover after cutting the cladding panel forming the worktop, and maintains pattern continuity with said worktop;

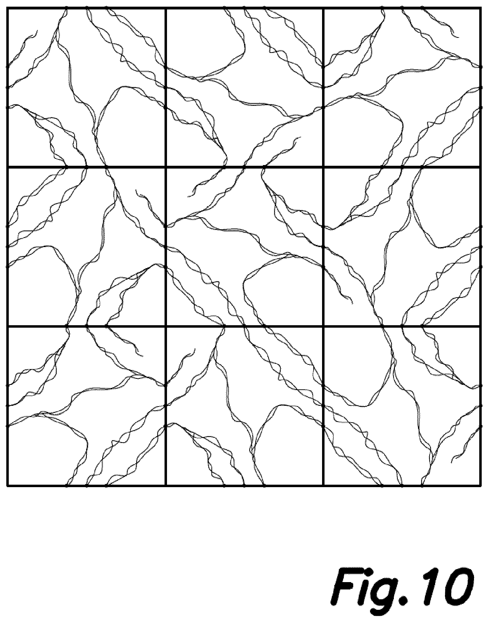

Figure 10 shows a set of nine square cladding parts obtained from cutting the cladding panel, with all of them having an identical pattern and being attached to one another in different orientations forming a continuous cladding for floors or walls.

### Detailed Description of an Embodiment

The attached drawings show illustrative non-limiting embodiments of the present invention.

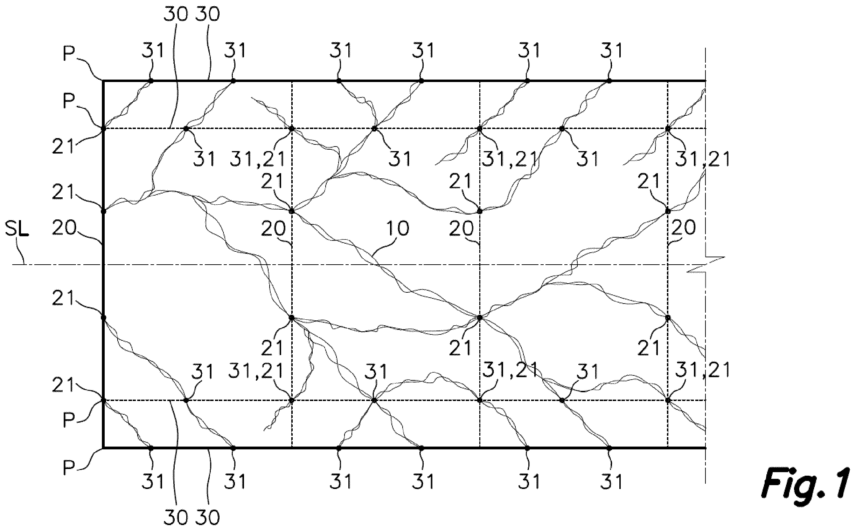

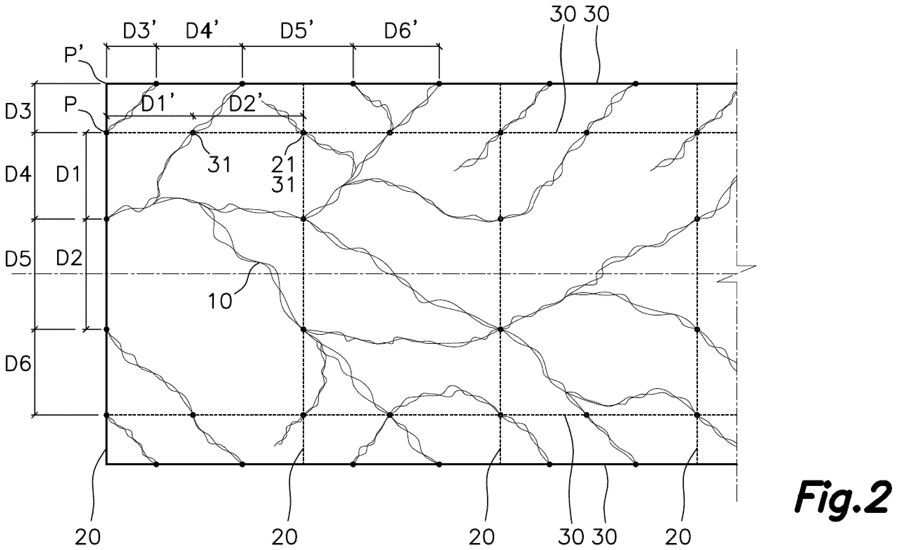

Figures 1 and 2 show an enlarged view of a portion of a cladding panel 1 like the one proposed, where two longitudinal edges of the cladding panel 1 and a transverse edge determining a rectangular cladding panel 1 can be seen.

The shown portion of the cladding panel 1 further comprises a longitudinal axis of symmetry SL in its center, parallel to and equidistant from the two longitudinal edges, in addition to two symmetrical longitudinal cutting lines 30, shown by a discontinuous line, arranged on either side of the longitudinal axis of symmetry SL.

The cladding panel 1 also includes three transverse cutting lines 20 equidistant from one another and perpendicular with respect to the longitudinal axis of symmetry SL.

Said longitudinal and transverse cutting lines 30 and 20 can be, for example, printed with washable ink on the surface of the cladding panel 1 to allow their elimination after installing the cladding panel 1, or alternatively marked, for example, on the borders of the panel or indicated in a measurement table.

In this example, the cladding panel 1 furthermore has an irregular pattern 10 in the form of zigzagging veins going through its surface, imitating the natural veins of a marble panel in this example.

The veins forming the pattern 10 intersect with the longitudinal cutting lines 30 only at longitudinal intersecting points 31, and they intersect with the transverse cutting lines 20 only at transverse intersecting points 21.

Furthermore, the longitudinal cutting lines 30 intersect with the transverse cutting lines 20 at corner points P given that, if the cladding panel is cut following two longitudinal and transverse cutting lines 30 and 20, the corner point P will become one of the corners of the resulting cladding panel portion.

In this example, some transverse and longitudinal intersecting points 21 and 31 and some corner points P coincide with one another.

The transverse intersecting points 21 of each transverse cutting line 20 are symmetrical with respect to the longitudinal axis of symmetry SL and arranged in an identical position with respect to the longitudinal axis of symmetry SL in all the transverse cutting lines 20. In other words, the transverse intersecting points 21 of a transverse cutting line 20 are aligned, in a direction parallel to the longitudinal axis of symmetry SL, with the transverse intersecting points 21 of the remaining transverse cutting lines 20.

This allows cutting the cladding panel 1 along any transverse cutting line 20, obtaining a transverse edge with identical transverse intersecting points 21 at all times.

In an equivalent manner, it is proposed for the longitudinal intersecting points 31 of two longitudinal cutting lines 30, that are symmetrical with respect to the longitudinal axis of symmetry SL and constitute a pair of longitudinal cutting lines 30, to also be located in an identical position in both longitudinal cutting lines 30, the longitudinal intersecting points 31 of one longitudinal cutting line 30 being aligned with a symmetrical longitudinal intersecting point 31 located in the other longitudinal cutting line 30.

Furthermore, it is proposed for each transverse intersecting point 21 on a cutting line 20 to be located at a distance, with respect to a corner point P, that is equal to the complementary longitudinal intersecting points 31 located in a longitudinal cutting line passing through said corner point P.

This feature is shown in Figure 2 which indicates how two transverse intersecting points 21 are located at a distance D1 and D2 with respect to a corner point P, those distances being equal to distances D1' and D2' of two longitudinal intersecting points 31 with respect to that same corner point P of a longitudinal cutting line 30 passing through said corner point P.

Likewise, Figure 2 also shows how four transverse intersecting points 21 are located at a distance D3, D4, D5, and D6 with respect to a corner point P', those distances being equal to distances D3', D4', D5', and D6' of two longitudinal intersecting points 31 with respect to that same corner point P' of a longitudinal cutting line 30 passing through said corner point P'.

When these features are met, by cutting the cladding panel 1 along any of the transverse cutting lines 20 and along any pair of symmetrical longitudinal cutting lines 30, the resulting part will be able to fit with other parts, achieving continuity in the pattern 10.

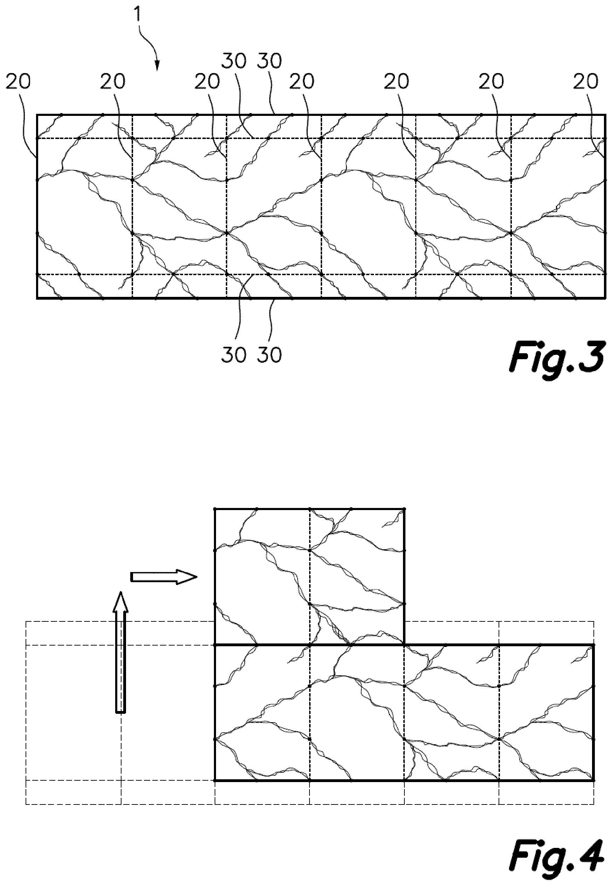

Figure 3 shows an example of a complete cladding panel 1 before cutting only with an indication of the longitudinal cutting lines 20 and transverse cutting lines 20.

Figure 4 shows the same cladding panel 1 after having reduced its width by cutting it along a pair of symmetrical longitudinal cutting lines 30, the cladding panel 1 also having been divided further into two portions. The resulting left portion has been moved following the direction indicated by the arrows and placed adjacent to the right portion of the cladding panel 1, causing one of their respective corner points P to coincide. The result is an L-shaped cladding panel 1 the pattern 10 of which presents the matching and continuity of veins between the attached portions.

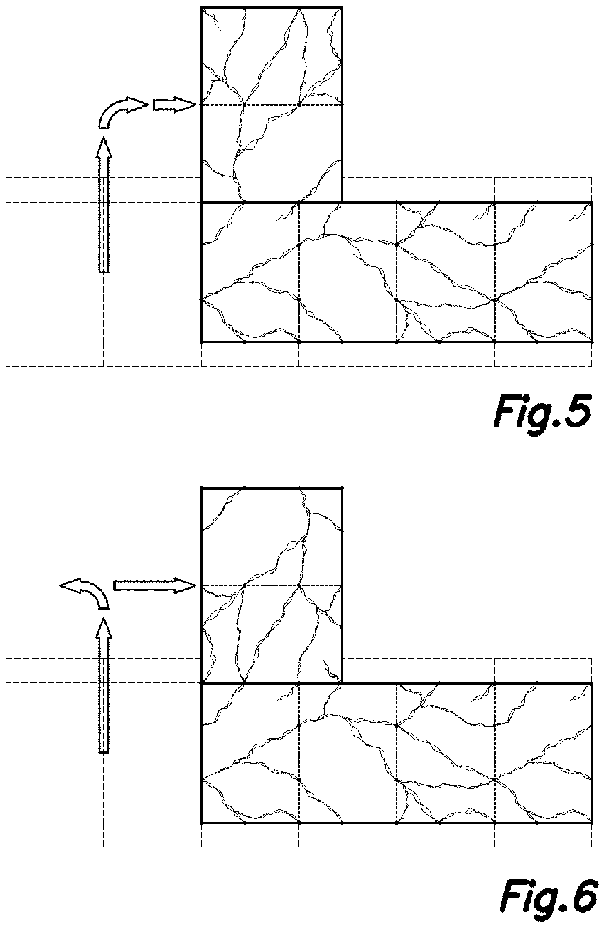

Figure 5 shows how those same left and right portions can also be connected achieving continuity in the pattern 10 when the left portion is not only translated but also rotated 90º in one direction.

Likewise, Figure 6 shows how the pattern 10 also coincides when the left portion is rotated 90º in another inverse direction.

Therefore, Figures 4, 5, and 6 demonstrate the great versatility of the system which allows very freely combining the portions resulting from cutting the cladding panel 1, achieving continuity in the pattern 10, in this example veins, between the adjacent portions at all times.

Naturally, if multiple cladding panels 1 the longitudinal and transverse cutting lines 30 and 20 of which have the longitudinal and transverse intersecting points 31, 21 in an identical position are produced, this effect may also be achieved by combining cut portions of different cladding panels 1.

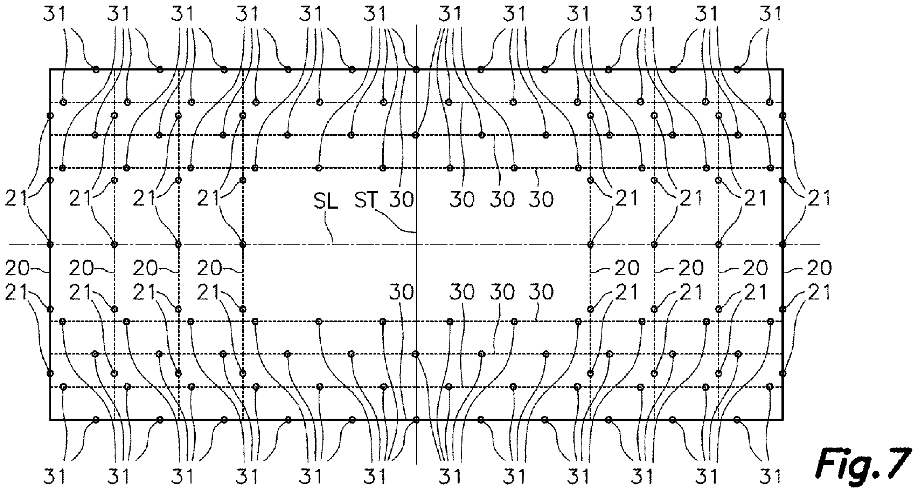

Figure 7 shows a design step of the proposed method which consists of defining on a cladding panel 1 the position of the longitudinal cutting lines 30 and transverse cutting lines 20 and their corresponding longitudinal intersecting points 31 and transverse intersecting points 21, according to the rules described above.

In this example, the cladding panel 1 is a cladding panel 1 which, in addition to the longitudinal axis of symmetry SL, includes a transverse axis of symmetry ST perpendicular to the longitudinal axis of symmetry SL.

The transverse cutting lines 20 are symmetrical on both sides of the transverse axis of symmetry ST.

Once the longitudinal intersecting points 31 and transverse intersecting points 21 are defined, the next design step consists of defining an irregular pattern 10 of lines, veins, and/or strips which must intersect with the longitudinal intersecting lines 30 and transverse intersecting lines 20 only at the longitudinal intersecting points 31 and transverse intersecting points 21.

This step can be performed, for example, by applying the teachings of document WO2016189377 mentioned above.

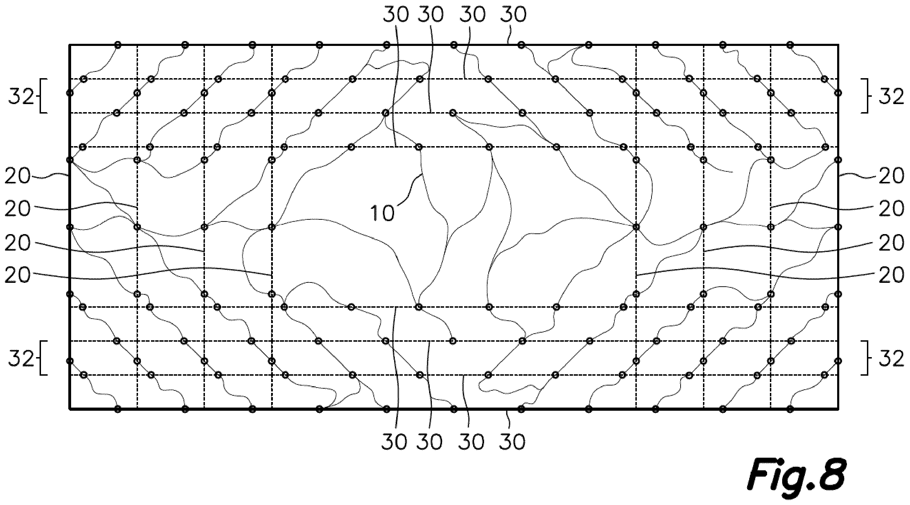

In this example (see Figure 8), a cutting band 32 has furthermore been defined on each side of the longitudinal axis of symmetry SL between two longitudinal cutting lines 30, assuring that all the lines, veins, and/or strips of the pattern 10 contained in said cutting band 32 are straight and defined at a 45º angle with respect to the two longitudinal cutting lines 30 limiting the cutting band 32, each connecting two longitudinal intersecting points 31 of the two longitudinal cutting lines 30 demarcating the cutting band 32.

As a result of this feature, any line contained in said cutting band 32 and parallel to the longitudinal cutting lines 30 will intersect with the pattern 10 at longitudinal intersecting points 31 complying with the requirements described above, converting said line into a longitudinal cutting line 30. Therefore, it can be considered that the cutting band 32 contains infinite longitudinal cutting lines 30, which allows cutting the cladding panel 1 to any desired width, within the range defined between the two cutting bands 32 symmetrical with respect to the longitudinal axis of symmetry SL.

Figure 9 shows an example of the use that can be made of the proposed cladding panel 1. In this case, the portions obtained from cutting the cladding panel 1 have been used for cladding a kitchen worktop 40.

In this example, a G-shaped kitchen comprising four portions of connected cladding panel 1 has been proposed, successfully maintaining continuity in the pattern 10, in this example veins, between the four adjacent portions.

The manner in which it would be possible to clad a vertical wall of the kitchen above the worktop 40, corresponding to the splashback 41 of the kitchen or to a plinth 42, or below the worktop 40, corresponding to the front 43 of the worktop, is furthermore shown, achieving continuity in the pattern 10 also between the portions of cladding panel 1 of the worktop 40 and the vertical wall.

In Figure 9, the portions of the cladding panel 1 intended for forming the splashback 41 or the front 43 of the worktop 40 have been drawn in a landscape orientation to show that the pattern 10 is continuous with the worktop 40.

This embodiment shows, by way of example, the splashback 41 on the left side of the drawing and also a plinth 42 on the lower side of the drawing.

Plinths 42 can be obtained from small portions obtained from cutting the cladding panel 1, thereby better utilizing the cladding panel 1 and reducing leftover.

It is contemplated that a cladding panel 1 may contain two parallel longitudinal axes of symmetry SL, each with its respective symmetrical longitudinal cutting lines 30 and transverse cutting lines 20, which allow longitudinally dividing the cladding panel 1 into two halves, each of them containing a longitudinal axis of symmetry SL which allows obtaining other portions with a matching pattern of each of the two halves.

It will be understood that the different parts making up the invention described in an embodiment can be freely combined with parts described in other different embodiments even though said combination has not been explicitly described, provided that the combination falls within the scope of the claims.

## Claims

1. A cladding panel cuttable in cladding panel portions with a matching pattern, the cladding panel including a front face and a back face, the front face including an irregular pattern (10) of elongated lines, veins, and/or strips, **characterized in that**
the elongated lines, veins, and/or strips are configured to include a longitudinal succession of longitudinal intersecting points (31) symmetrically arranged with respect to a longitudinal axis of symmetry (SL), each longitudinal succession of longitudinal intersecting points (31) defining one longitudinal cutting line (30) symmetric with respect to a longitudinal axis of symmetry (SL) to another longitudinal cutting line (30);
the elongated lines, veins, and/or strips are configured to include a transversal successions of transverse intersecting points (21) symmetrically arranged with respect to the longitudinal axis of symmetry (SL), the transverse intersecting points (21) of all the transversal successions being in an identical position, in longitudinal alignment, each transversal successions of transverse intersecting points (21) defining one transverse cutting line (20), orthogonal to the longitudinal cutting lines (30); and wherein
the longitudinal successions of longitudinal intersecting points (31) and the transversal successions of transverse intersecting points (21) are further configured to determine a corner point (P) on the intersection between each transverse cutting line (20) and each longitudinal cutting line (30), and are configured to have each transverse intersecting point (21) of a transverse cutting line (20) at the same distance from a corner point (P) which said transverse cutting line (20) goes through as a corresponding longitudinal intersecting point (31) of a longitudinal cutting line (30) going through the same corner point (P);
such that two parts obtained by cutting the cladding panel (1) along any transverse cutting line (20) and/or along any pair of symmetric longitudinal cutting lines (30), when located adjacent to their respective coinciding corner points (P), will have, therebetween, a matching and continuous irregular pattern (10) of elongated lines, veins, and/or strips.

2. The cladding panel according to claim 1, wherein the transverse cutting lines (20) form pairs of transverse cutting lines (20) symmetrical with respect to a transverse axis of symmetry (ST).

3. The cladding panel according to claim 1 or 2, wherein between two longitudinal cutting lines (30) located on one and the same side of the longitudinal axis of symmetry (SL) there is a plurality of adjacent longitudinal cutting lines (30) separated by a distance forming a cutting band (32), the longitudinal intersecting points (31) of the longitudinal cutting lines (30) of said cutting band (32) being connected to one another by means of lines, veins, and/or strips of the irregular pattern (10) that are inclined 45º with respect to said longitudinal cutting lines (30).

4. The cladding panel according to claim 3, wherein the mentioned distance separating the longitudinal cutting lines (30) of a cutting band (32) is equal to or less than 10 mm, or equal to or less than 4 mm.

5. The cladding panel according to any one of the preceding claims, wherein the irregular pattern (10) simulates veins of natural stone.

6. The cladding panel according to any one of the preceding claims, wherein:
the irregular pattern (10) is formed by elongated lines, veins, and/or strips that are embedded in said cladding panel (1) and made of a material visually distinguishable from the material forming the rest of the cladding panel (1); or
the irregular pattern (10) is printed, screen-printed, and/or engraved on a visible surface of the cladding panel (1).

7. The cladding panel according to any one of the preceding claims, wherein the cladding panel (1) is a ceramic panel or a laminated panel.

8. The cladding panel according to any one of preceding claims 1 to 6, wherein the cladding panel (1) is an artificial stone slab.

9. The cladding panel according to any one of the preceding claims, wherein the cladding panel (1) includes several adjacent and parallel longitudinal axes of symmetry (ST), each being provided with respective pairs of symmetric longitudinal cutting lines (30).

10. The cladding panel according to any one of the preceding claims, wherein the transverse cutting lines (20) and longitudinal cutting lines (30) are marked in the cladding panel (1):
on the back face of the cladding panel (1); or
on the front face by means of a soluble ink; or
on a removable protective film adhered to the cladding panel (1).

11. A manufacturing method for manufacturing a cladding panel according to claim 1 to 10, which is a cladding panel cuttable in cladding panel portions with a matching pattern according to the preceding claims, **characterized in that** the method comprises a design step which comprises:
defining, on a cladding panel (1) to be produced, a plurality of transverse cutting lines (20), each one including transverse intersecting points (21) symmetrical with respect to a longitudinal axis of symmetry (SL), said transverse intersecting points (21) being in an identical position in all the transverse cutting lines (20) defined on said cladding panel (1);
defining, on said cladding panel (1) to be produced, pairs of symmetric longitudinal cutting lines (30) symmetrical with respect to the longitudinal axis of symmetry (SL), each of said longitudinal cutting lines (30) including longitudinal intersecting points (31), said longitudinal intersecting points (31) being in an identical position in the two longitudinal cutting lines (30) forming each pair of symmetrical longitudinal cutting lines (30);
defining, on said cladding panel (1) to be produced, an irregular pattern (10) of elongated lines, veins, and/or strips intersecting with the transverse cutting lines (20) at the transverse intersecting points (21) and the longitudinal cutting lines (30) at the longitudinal intersecting points (31).
each transverse intersecting point (21) of a transverse cutting line (20) being defined at the same distance from a corner point (P) which said transverse cutting line (20) goes through as a corresponding longitudinal intersecting point (31) defined in the longitudinal cutting line (30) passing through said corner point (P);
and a manufacturing step which comprises producing the cladding panel (1) defined in the design step.

12. The manufacturing method according to claim 11, wherein the transverse cutting lines (20) are defined forming pairs of transverse cutting lines (20) symmetrical with respect to a transverse axis of symmetry (ST).

13. The manufacturing method according to claim 11 or 12, wherein the manufacturing step comprises producing a cladding panel (1) and printing, engraving, or screen-printing the irregular pattern (10) on a visible surface of said cladding panel (1).

14. The manufacturing method according to claim 11 or 12, wherein the manufacturing step comprises producing an artificial stone slab including the irregular pattern (10) of elongated lines, veins, and/or strips embedded in said artificial stone slab, the irregular pattern being made of a material visually distinguishable from the material forming the rest of the artificial stone slab.

15. The manufacturing method according to claim 14, wherein the manufacture of the artificial stone slab includes at least the following production steps:
pouring of the material which constitutes the artificial stone slab with no irregular pattern into a cast;
at least one compaction step of the material which constitutes the artificial stone slab without an irregular pattern;
integration of the material forming the irregular pattern into the previously compacted material;
at least one compaction step of all the material which constitutes the artificial stone slab;
a curing step.

16. Use of the cladding panel according to claim 1 to 10, which is a cladding panel cuttable in cladding panel portions with a matching pattern, as a kitchen worktops (40) with an irregular pattern (10) of matching and continuous elongated lines, veins, and/or strips throughout the entire kitchen worktop (40), the kitchen worktop (40) being formed by several parts of the same width obtained from cutting the cladding panel (1) along any pair of longitudinal cutting lines (30), and along any transverse cutting line (20), subsequently assembled with their corresponding corner points (P) coinciding with one another.

## Patentansprüche

1. Verkleidungsplatte, welche in Verkleidungsplattenteile schneidbar ist, mit passendem Muster, wobei die Verkleidungsplatte eine Vorderfläche und eine Rückfläche beinhaltet, wobei die Vorderfläche ein unregelmäßiges Muster (10) von länglichen Linien, Adern und/oder Streifen beinhaltet, **dadurch gekennzeichnet, dass**
die länglichen Linien, Adern und/oder Streifen dazu ausgebildet sind, eine längslaufende Reihenfolge von längslaufenden Kreuzungspunkten (31), welche in Bezug auf eine längliche Symmetrieachse (SL) symmetrisch angeordnet sind, zu beinhalten, wobei jede längslaufende Reihenfolge von längslaufenden Kreuzungspunkten (31) eine längliche Schnittlinie (30) definiert, welche in Bezug auf eine längliche Symmetrieachse (SL) zu einer anderen länglichen Schnittlinie (30) symmetrisch ist;
die länglichen Linien, Adern und/oder Streifen dazu ausgebildet sind, querlaufende Reihenfolgen von querlaufenden Kreuzungspunkten (21), welche in Bezug auf die längliche Symmetrieachse (SL) symmetrisch angeordnet sind, zu beinhalten, wobei die querlaufenden Kreuzungspunkte (21) sämtlicher querlaufenden Reihenfolgen in einer identischen Stellung sind, in Längsausrichtung, wobei jede querlaufende Reihenfolge von querlaufenden Kreuzungspunkten (21) eine querlaufende Schnittlinie (20) definiert, welche orthogonal zu den länglichen Schnittlinien (30) ist; und wobei
die längslaufenden Reihenfolgen von längslaufenden Kreuzungspunkten (31) und die querlaufenden Reihenfolgen von querlaufenden Kreuzungspunkten (21) zusätzlich dazu ausgebildet sind, einen Eckpunkt (P) bei der Kreuzung zwischen jeder querlaufenden Schnittlinie (20) und jeder länglichen Schnittlinie (30) zu bestimmen, und dazu ausgebildet sind, jeden querlaufenden Kreuzungspunkt (21) einer querlaufenden Schnittlinie (20) mit demselben Abstand von einem Eckpunkt (P), durch welchen die genannte querlaufende Schnittlinie (20) durchgeht, als ein entsprechender länglicher Kreuzungspunkt (31) einer länglichen Schnittlinie (30), welche durch den gleichen Eckpunkt (P) durchgeht, zu haben;
sodass zwei Stücke, welche durch das Schneiden der Verkleidungsplatte (1) entlang jeder querlaufenden Schnittlinie (20) und/oder entlang jedes Paares von symmetrischen länglichen Schnittlinien (30) erhalten werden, wenn sie sich deren jeweiligen übereinstimmenden Eckpunkten (P) benachbart befinden, ein passendes und kontinuierliches unregelmäßiges Muster (10) von länglichen Linien, Adern und/oder Streifen dazwischen haben werden.

2. Verkleidungsplatte nach Anspruch 1, wobei die querlaufenden Schnittlinien (20) Paaren von querlaufenden Schnittlinien (20) bilden, welche in Bezug auf eine querlaufende Symmetrieachse (ST) symmetrisch sind.

3. Verkleidungsplatte nach Anspruch 1 oder 2, wobei es zwischen zwei länglichen Schnittlinien (30), welche sich auf der gleichen Seite der länglichen Symmetrieachse (SL) befinden, eine Vielzahl von benachbarten länglichen Schnittlinien (30) gibt, welche mit einem Abstand getrennt sind, unter Bildung eines Schnittbands (32), wobei die längslaufenden Kreuzungspunkte (31) der länglichen Schnittlinien (30) des genannten Schnittbands (32) mittels Linien, Adern und/oder Streifen des unregelmäßigen Musters (10) miteinander verbunden sind, welche 45º in Bezug auf die genannten länglichen Schnittlinien (30) geneigt sind.

4. Verkleidungsplatte nach Anspruch 3, wobei der erwähnte Abstand, welcher die länglichen Schnittlinien (30) eines Schnittbands (32) trennt, gleich oder kleiner als 10 mm, oder gleich oder kleiner als 4 mm ist.

5. Verkleidungsplatte nach einem der vorhergehenden Ansprüche, wobei das unregelmäßige Muster (10) Natursteinadern nachbildet.

6. Verkleidungsplatte nach einem der vorhergehenden Ansprüche, wobei:
das unregelmäßige Muster (10) aus länglichen Linien, Adern und/oder Streifen gebildet ist, welche in der Verkleidungsplatte (1) eingebettet sind und aus einem Material hergestellt sind, welches optisch vom Material, welches den Rest der Verkleidungsplatte (1) bildet, unterscheidbar ist; oder
das unregelmäßige Muster (10) auf einer sichtbaren Oberfläche der Verkleidungsplatte (1) gedruckt, siebgedruckt und/oder eingraviert ist.

7. Verkleidungsplatte nach einem der vorhergehenden Ansprüche, wobei die Verkleidungsplatte (1) eine Keramikplatte oder eine Schichtstoffplatte ist.

8. Verkleidungsplatte nach einem der vorhergehenden Ansprüche 1 bis 6, wobei die Verkleidungsplatte (1) eine künstliche Steinplatte ist.

9. Verkleidungsplatte nach einem der vorhergehenden Ansprüche, wobei die Verkleidungsplatte (1) mehrere benachbarte und parallele längliche Symmetrieachsen (ST) beinhaltet, wobei jede mit jeweiligen Paaren von symmetrischen länglichen Schnittlinien (30) versehen ist.

10. Verkleidungsplatte nach einem der vorhergehenden Ansprüche, wobei die querlaufenden Schnittlinien (20) und länglichen Schnittlinien (30) in der Verkleidungsplatte (1):
auf der Rückfläche der Verkleidungsplatte (1); oder
auf der Vorderfläche mittels einer löslichen Tinte; oder
auf einem lösbaren Schutzfilm, welcher an der Verkleidungsplatte (1) geklebt ist;
markiert sind.

11. Herstellungsverfahren zur Herstellung einer Verkleidungsplatte nach Anspruch 1-10, welche in Verkleidungsplattenteile mit passendem Muster schneidbar ist, **dadurch gekennzeichnet, dass** das Verfahren einen Entwurfsschritt umfasst, welcher Folgendes umfasst:
das Definieren, auf einer zu produzierenden Verkleidungsplatte (1), einer Vielzahl von querlaufenden Schnittlinien (20), wobei jede querlaufende Kreuzungspunkte (21) beinhaltet, welche symmetrisch in Bezug auf eine längliche Symmetrieachse (SL) sind, wobei die genannten querlaufenden Kreuzungspunkte (21) in einer identischen Stellung in sämtlichen querlaufenden Schnittlinien (20) sind, welche auf der genannten Verkleidungsplatte (1) definiert sind;
das Definieren, auf der genannten zu produzierenden Verkleidungsplatte (1), von Paaren von symmetrischen länglichen Schnittlinien (30), welche symmetrisch in Bezug auf die längliche Symmetrieachse (SL) sind, wobei jede der genannten länglichen Schnittlinien (30) längslaufenden Kreuzungspunkte (31) beinhaltet, wobei die genannten längslaufenden Kreuzungspunkte (31) in einer identischen Stellung in den beiden länglichen Schnittlinien (30) sind, unter Bildung jedes Paares von symmetrischen länglichen Schnittlinien (30);
das Definieren, auf der genannten zu produzierenden Verkleidungsplatte (1), eines unregelmäßigen Musters (10) von länglichen Linien, Adern und/oder Streifen, welche sich mit den querlaufenden Schnittlinien (20) an den querlaufenden Kreuzungspunkten (21) und mit den länglichen Schnittlinien (30) an den längslaufenden Kreuzungspunkten (31) kreuzen;
wobei jeder querlaufende Kreuzungspunkt (21) einer querlaufenden Schnittlinie (20) mit demselben Abstand von einem Eckpunkt (P), durch welchen die genannte querlaufende Schnittlinie (20) durchgeht, definiert ist wie ein entsprechender längslaufender Kreuzungspunkt (31), welcher in der länglichen Schnittlinie (30) definiert ist, welche durch den genannten Eckpunkt (P) durchgeht;
und einen Herstellungsschritt, welcher das Produzieren der Verkleidungsplatte (1), welche im Entwurfsschritt definiert wird, umfasst.

12. Herstellungsverfahren nach Anspruch 11, wobei die querlaufenden Schnittlinien (20) unter Bildung von Paaren von querlaufenden Schnittlinien (20), welche symmetrisch in Bezug auf eine querlaufende Symmetrieachse (ST) sind, definiert sind.

13. Herstellungsverfahren nach Anspruch 11 oder 12, wobei der Herstellungsschritt das Produzieren einer Verkleidungsplatte (1) und das Drucken, Eingravieren oder Siebdrucken des unregelmäßigen Musters (10) auf einer sichtbaren Oberfläche der genannten Verkleidungsplatte (1) umfasst.

14. Herstellungsverfahren nach Anspruch 11 oder 12, wobei der Herstellungsschritt das Produzieren einer künstlichen Steinplatte umfasst, welche das unregelmäßige Muster (10) von länglichen Linien, Adern und/oder Streifen in der genannten künstlichen Steinplatte eingebettet beinhaltet, wobei das unregelmäßige Muster aus einem Material hergestellt ist, welches optisch vom Material, welches den Rest der künstlichen Steinplatte bildet, unterscheidbar ist.

15. Herstellungsverfahren nach Anspruch 14, wobei die Herstellung der künstlichen Steinplatte mindestens die folgenden Produktionsschritte beinhaltet:
das Gießen des Materials, welches die künstliche Steinplatte bildet, ohne ein unregelmäßiges Muster in eine Gussform;
mindestens einen Verdichtungsschritt des Materials, welches die künstliche Steinplatte bildet, ohne ein unregelmäßiges Muster;
das Integrieren des Materials, welches das unregelmäßige Muster bildet, in das zuvor verdichtetes Material;
mindestens einen Verdichtungsschritt des gesamten Materials, welches die künstliche Steinplatte bildet;
einen Aushärtungsschritt.

16. Verwendung der Verkleidungsplatte nach Anspruch 1 -10, welche in Verkleidungsplattenteile mit passendem Muster schneidbar ist, als Küchenarbeitsplatte (40) mit einem unregelmäßigen Muster (10) von passenden und kontinuierlichen länglichen Linien, Adern und/oder Streifen durch die gesamte Küchenarbeitsplatte (40), wobei die Küchenarbeitsplatte (40) aus mehreren Stücken der gleichen Breite gebildet ist, welche vom Schneiden der Verkleidungsplatte (1) entlang jedes Paares von länglichen Schnittlinien (30) und entlang jeder querlaufenden Schnittlinie (20) erhalten werden, welche nachträglich derart zusammengefügt werden, dass deren entsprechenden Eckpunkten (P) miteinander übereinstimmen.

## Revendications

1. Un panneau de revêtement sécable en portions de panneau de revêtement ayant un modèle de correspondance, le panneau de revêtement comprenant une face avant et une face arrière, la face avant comprenant un modèle irrégulier (10) de lignes, nervures et/ou bandes allongées, **caractérisé en ce que**
les lignes, nervures et/ou bandes allongées sont configurées pour comprendre une succession longitudinale de points d'intersection (31) symétriquement agencés par rapport à un axe de symétrie longitudinal (SL), chaque succession longitudinale de points d'intersection longitudinaux (31) définissant une ligne de coupe longitudinale (30) symétrique par rapport à un axe de symétrie longitudinal (SL) d'une autre ligne de coupe longitudinale (30) ;
les lignes, nervures et/ou bandes allongées sont configurées pour comprendre une succession transversale de points d'intersection (21) symétriquement agencés par rapport à l'axe de symétrie longitudinal (SL), les points d'intersection transversaux (21) de toutes les successions transversales étant dans une position identique , en alignement longitudinal, chaque succession transversale de points d'intersection transversaux (21) définissant une ligne de coupe transversale (20) orthogonale aux lignes de coupe longitudinales (30) ; et dans lequel
les successions longitudinales de points d'intersection longitudinaux (31) et les successions transversales de points d'intersection transversaux (21) sont en outre configurés pour déterminer un point d'angle (P) sur l'intersection entre chaque ligne de coupe transversale (20) et chaque ligne de coupe longitudinale (30) et sont configurées pour avoir chacune un point d'intersection transversal (21) et d'une ligne de coupe transversale (20) à la même distance d'un point d'angle (P) à travers lequel cette ligne de coupe transversale (20) passe comme point d'intersection longitudinal (31) correspondant d'une ligne de coupe longitudinale (30) passant à travers le même point d'angle (P) ;
de sorte que deux parties obtenues en coupant le panneau de revêtement (1) le long d'une quelconque ligne de coupe transversale (20) et/ou le long d'une quelconque paire de lignes de coupe longitudinales symétriques (30), lorsqu'elles sont situées adjacentes à leurs points d'angle respectifs coïndicants (P), auront entre elles un modèle irrégulier combiné et continu (10) de lignes, nervures et/ou bandes allongées.

2. Le panneau de revêtement conformément à la revendication 1, dans lequel les lignes de coupe transversales (20) forment des paires de lignes de coupe transversales (20) symétriques par rapport à un axe de symétrie transversal (ST).

3. Le panneau de revêtement conformément à la revendication 1 ou 2, dans lequel entre deux lignes de coupe longitudinales (30) situées sur un et même côté de l'axe de symétrie longitudinal (SL) il y a une pluralité de lignes de coupe longitudinales adjacentes (30) séparées par une distance formant une bande de coupe (32), les points d'intersection longitudinaux (31) des lignes de coupe longitudinales (30) de cette bande de coupe (32) étant reliés entre eux au moyen de lignes, nervures et/ou bandes d'un modèle irrégulier (10) qui sont inclinées 45º par rapport à ces lignes de coupe longitudinales (30).

4. Le panneau de revêtement conformément à la revendication 3, dans lequel cette distance séparant les lignes de coupe longitudinales (30) d'une bande de coupe (32) est égale ou inférieure à 10 mm ou bien égale ou inférieure à 4 mm.

5. Le panneau de revêtement conformément à une quelconque des revendications précédentes, dans lequel le modèle irrégulier (10) simule des nervures en pierre naturelle.

6. Le panneau de revêtement conformément à une quelconque des revendications précédentes, dans lequel :
le modèle irrégulier (10) est formé par des lignes, nervures et/ou bandes allongées qui sont encastrées dans ce panneau de revêtement (1) et faites en un matériau pouvant être visuellement distingué du matériau formant le reste du panneau de revêtement (1) ; ou
le modèle irrégulier (10) est imprimé, sérigraphié et/ou gravé sur une surface visible du panneau de revêtement (1).

7. Le panneau de revêtement conformément à une quelconque des revendications précédentes, dans lequel le panneau de revêtement (1) est un panneau en céramique ou un panneau lamellé.

8. Le panneau de revêtement conformément à une quelconque des revendications précédentes 1 à 6, dans lequel le panneau de revêtement (1) est une dalle en pierre artificielle.

9. Le panneau de revêtement conformément à une quelconque des revendications précédentes, dans lequel le panneau de revêtement (1) comprend plusieurs axes de symétrie longitudinaux, adjacents et parallèles (ST), chacun étant pourvu de paires respectives de lignes de coupe longitudinales symétriques (30).

10. Le panneau de revêtement conformément à une quelconque des revendications précédentes, dans lequel les lignes de coupe transversales (20) et les lignes de coupe longitudinales (30) sont marquées dans le panneau de revêtement (1) :
sur la face arrière du panneau de revêtement (1) ; ou
sur la face avant au moyen d'encre soluble ; ou
sur un film protecteur détachable collé au panneau de revêtement (1).

11. - Une méthode de fabrication pour fabriquer un panneau de revêtement conformément à la revendication 1-10, qui est un panneau de revêtement sécable en des portions de panneau de revêtement ayant un modèle de correspondance, **caractérisé**
**en ce que** la méthode comporte une étape de design comportant :
définir, sur un panneau de revêtement (1) à fabriquer, une pluralité de lignes de coupe transversales (20), chacune comprenant des points d'intersection transversaux (21) symétriques par rapport à un axe de symétrie longitudinal (SL), ces points d'intersection transversaux (21) étant dans un positon identique dans toutes les lignes de coupe transversales (20) définies sur ce panneau de revêtement (1) ;
définir, sur ce panneau de revêtement (1) à fabriquer, des paires de lignes de coupe longitudinales symétriques (30), symétriques par rapport à l'axe de symétrie longitudinal (SL), chacune de ces lignes de coupe longitudinales (30) comprenant des points d'intersection longitudinaux (31), ces points d'intersection longitudinaux (31) étant dans une position identique dans les deux lignes de coupe longitudinales (30) en formant chaque paire de lignes de coupe longitudinales symétriques (30) ;
définir, sur ce panneau de revêtement (1) à fabriquer, un modèle irrégulier (10) de lignes, nervures et/ou bandes allongées d'intersection avec les lignes de coupe transversales (20) aux points d'intersection transversaux (21) et les lignes de coupe longitudinales (30) aux points d'intersection longitudinaux (31).
chaque point d'intersection transversal (21) d'une ligne de coupe transversale (20) étant définie à la même distance du point d'angle (P) à travers lequel cette ligne de coupe transversale (20) passe comme un point d'intersection longitudinal correspondant (31) défini dans la ligne de coupe longitudinale (30) passant à travers ce point d'angle (P) ;
et une étape de fabrication qui comporte fabriquer le panneau de revêtement (1) défini dans l'étape de design.

12. La méthode de fabrication conformément à la revendication 11, dans laquelle les lignes de coupe transversales (20) sont définies en formant des paires de lignes de coupe transversales (20) symétriques par rapport à un axe de symétrie transversal (ST).

13. La méthode de fabrication conformément à la revendication 11 ou 12, dans laquelle l'étape de fabrication comporte la fabrication d'un panneau de revêtement (1) et imprimer, graver ou sérigraphier le modèle irrégulier (10) sur une surface visible de ce panneau de revêtement (1).

14. La méthode de fabrication conformément à la revendication 11 ou 12, dans laquelle l'étape de fabrication comporte la fabrication d'une dalle en pierre artificielle comprenant le modèle irrégulier (10), de lignes, nervures et/ou bandes allongées encastrées dans cette dalle en pierre artificielle, le modèle irrégulier étant fait d'un matériau pouvant être visuellement distingué du matériau formant le reste de la dalle en pierre artificielle.

15. La méthode de fabrication conformément à la revendication 14, dans laquelle l'étape de fabrication de la dalle en pierre artificielle comprend les étapes de fabrication suivantes :
verser le matériau qui constitue la dalle en pierre artificielle sans modèle irrégulier dans un moule ;
au moins une étape de compaction du matériau qui constitue la dalle en pierre artificielle sans un modèle irrégulier ;
intégration du matériau formant le modèle irrégulier dans le matériau préalablement compacté ;
au moins une étape de compaction de tout le matériau qui constitue la dalle en pierre artificielle ;
une étape de durcissement.

16. Utilisation du panneau de revêtement conformément à la revendication 1-10, qui est un panneau de revêtement sécable en des portions de panneau de revêtement avec un modèle de correspondance comme un plan de travail de cuisine (40) ayant un modèle irrégulier (10) de correspondance et de lignes, nervures et/ou bandes allongées à travers tout le plan de travail de cuisine (40), le plan de travail de cuisine (40) étant formé par plusieurs parties ayant la même largeur, obtenues de découper le panneau de revêtement (1) le long d'une paire quelconque de lignes de coupe longitudinales (30) et le long d'une quelconque ligne de coupe transversale (20) postérieurement assemblées avec leurs points d'angle correspondant (P) coïncidant entre eux.
